# EUROPEAN PATENT APPLICATION

(11) **EP 1 892 028 A1**
(43) Date of publication of application: **27.02.2008**
(21) Application number: 07075604.4
(22) Date of filing: 16.07.2007
(51) Int. Cl.: B01D 53/04

(54) **Radial sieve module**

(30) Priority: 07.08.2006 US 500103
(71) Applicant: Delphi Technologies, Inc., Troy, Michigan 48007 (US)
(72) Inventor: Ross, David A., Columbiaville MI 48421 (US); McClain, Michael S., Ortonville, MI 48462 (US); Pelletier, Dana G., Ortonville, MI 48462 (US)
(74) Representative: Denton, Michael John

(57) **Abstract**

A radial sieve module includes a housing (14) having two opposed ends. An inner porous tube (26) is established within the housing and is adapted to have gas flow radially therethrough. An outer porous tube (30) substantially surrounds the inner porous tube. The outer porous tube is also established a spaced distance from the housing such that a chamber (34) is formed therebetween. An adsorbent material (38) is established between at least a portion of the inner and outer porous tubes. End caps (42,42') are positioned adjacent each of two opposed ends of the housing, thereby substantially sealing the housing.

## Description

### TECHNICAL FIELD

The present disclosure relates generally to sieve modules, and more particularly to radial sieve modules.

### BACKGROUND OF THE INVENTION

Sieve modules are often formed of various parts. The number of parts may make it difficult to form substantially short bed lengths, a feature which may increase device efficiency. The costs involved with manufacturing the various parts of a sieve module may be substantially high for a device that may not work as efficiently as a device having a shorter bed length. Examples of manufacturing methods that are substantially complex and costly include those methods that involve hollow fiber tubing distributed between the beds with a manifold to distribute gas flow.

As such, it would be desirable to provide a radial sieve module that is formed of fewer components.

### SUMMARY OF THE INVENTION

A radial sieve module is disclosed herein. The module includes a housing that has two opposed ends. An inner porous tube is established within the housing, and is adapted to have gas flow radially therethrough. An outer porous tube substantially surrounds the inner porous tube, and is established a spaced distance from the housing such that a chamber is formed therebetween. An adsorbent material is established between at least a portion of the inner and outer porous tubes. End caps are positioned adjacent each of two opposed ends of the housing, thereby substantially sealing the housing.

### BRIEF DESCRIPTION OF THE DRAWINGS

Features and advantages of embodiments of the present disclosure will become apparent by reference to the following detailed description and drawings, in which like reference numerals correspond to similar, though not necessarily identical components. For the sake of brevity, reference numerals or features having a previously described function may not necessarily be described in connection with other drawings in which they appear.
Fig. 1 is a perspective, exploded view of an embodiment of a radial sieve module;
Fig. 2 is a cross-sectional front view of an embodiment of the radial sieve module;
Fig. 3 is a perspective view of another embodiment of a radial sieve module;
Fig. 4 is a perspective, exploded view of the radial sieve module of Fig. 3;
Fig. 5A is a semi-schematic front view of the embodiment of Fig. 1; and
Fig. 5B is a cross-sectional, semi-schematic view taken on line 5B-5B of Fig. 5A.

### DESCRIPTION OF THE PREFERRED EMBODIMENTS

Embodiment(s) of the radial sieve module (and method(s) of using the same) disclosed herein may advantageously be used for the extraction of nitrogen (or other undesirable gases) to provide substantially high concentrations of oxygen for medical purposes. Furthermore, embodiment(s) of the radial sieve module may integrate one or more beds of adsorbent into one continuous, radial bed. Further, an embodiment of the radial sieve module is adapted to minimize (i.e., shorten) the adsorbent bed size and/or minimize (i.e., reduce) the number of device components. Still further, an embodiment of the radial sieve module may be used in a system incorporating a pressure swing adsorption (PSA) process and may advantageously promote a fast response PSA cycle. It is believed that the shorter bed lengths may increase the efficiency of the modules when used with appropriately timed pressurization/flow cycles.

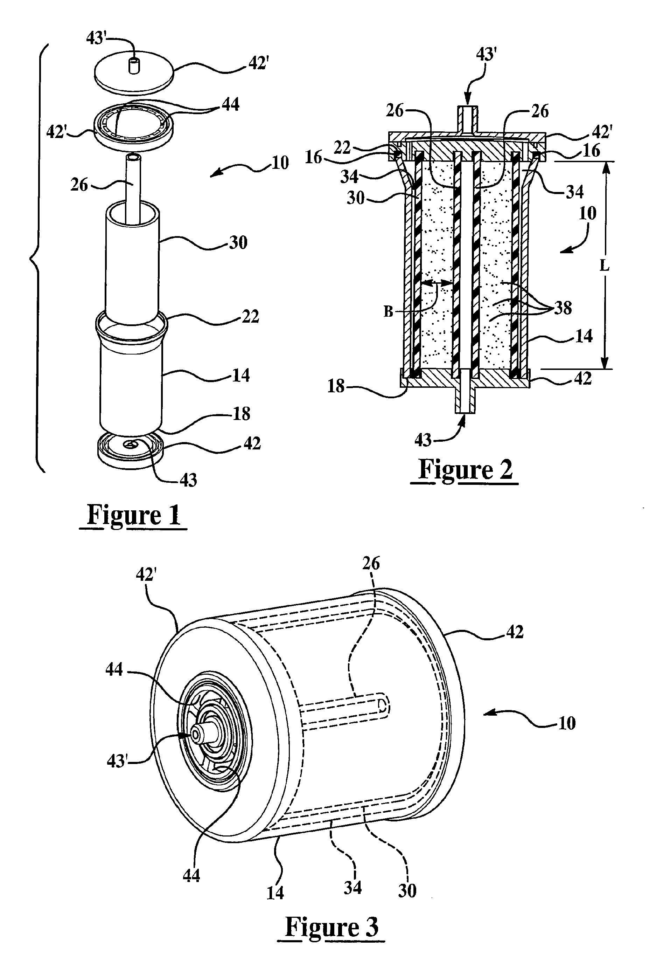

Referring to Figs. 1 through 4 together, embodiment(s) of a radial sieve module 10 are illustrated. The radial sieve module 10 generally includes a housing 14 having two opposed ends 18, 22, an inner porous tube 26 established within the housing 14, and an outer porous tube 30 substantially surrounding the inner porous tube 26 and established a spaced distance from the housing 14 such that a hollow channel 34 is formed therebetween. The radial sieve module 10 also includes an adsorbent material 38 established between at least a portion of the inner and outer porous tubes 26, 30. End caps 42, 42' are established adjacent each of two opposed ends 18, 22 of the housing 14, thereby substantially sealing the housing 14.

In an embodiment, the housing 14 generally has a substantially cylindrical shape. However, it is contemplated as being within the purview of the present disclosure that the housing 14 may be configured in any suitable shape, including, but not limited to other regular geometric shapes, or irregular geometric shapes. It is to be understood that the housing 14 is formed of a material that does not allow gas to flow through the outer wall(s) of the housing 14. Generally, the housing 14 is formed of any material that is not reactive with the gas(es) flowing in the module 10, and is able to withstand the pressure cycles that may be used. Non-limitative examples of suitable housing 14 materials include aluminum (e.g., extruded aluminum), engineering grade thermal plastics that are designed taking into account the requirements of a pressure vessel (e.g., projected pressures, etc.), or the like, or combinations thereof.

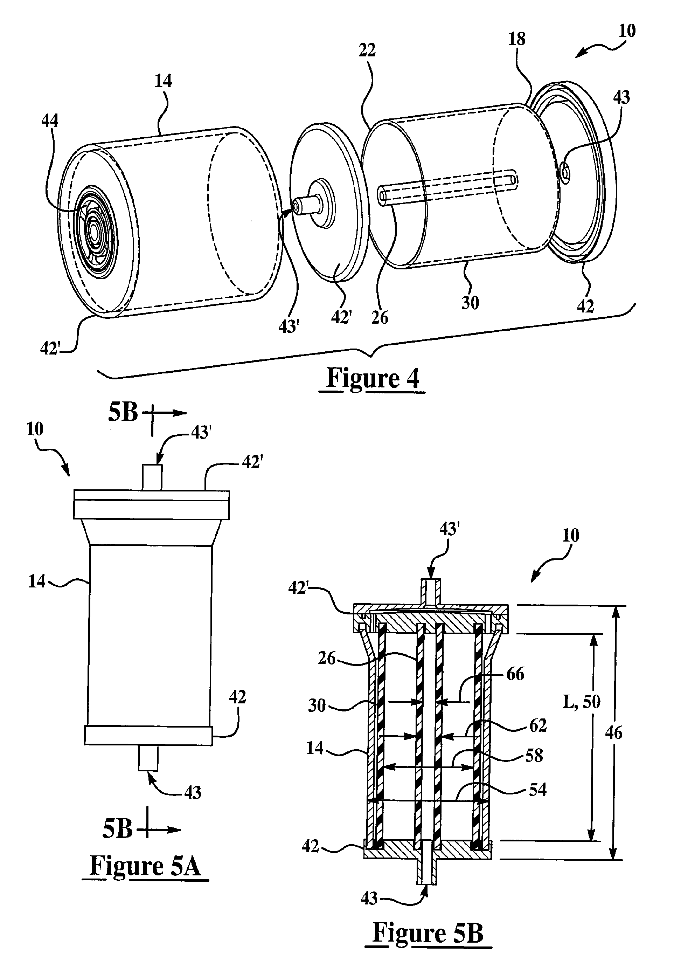

The housing 14 is sealed with two end caps 42, 42' located adjacent the opposed ends 18, 22. In an embodiment, each of the end caps 42, 42' is formed integrally with the housing 14. As such, the end caps 42, 42' may be formed from the same material as the housing 14. In another embodiment, specifically shown in Fig. 4, one end cap 42 is formed integrally with the housing 14, while the other end cap 42' is a separate piece that may be attached to the housing 14 with any suitable seal member 16 therebetween. In still another embodiment, both end caps 42, 42' may be separate pieces from the housing 14 that are configured to sealingly engage with the housing 14. In this embodiment, one of the end caps 42, 42' may be sealingly engaged with one of the two opposed ends 18, 22, and the other of the end caps 42', 42 may be sealingly engaged with the other of the two opposed ends 22, 18 via respective sealing members 16 or other suitable sealing means.

It is to be understood that the seal member 16 may be formed from any suitable sealing material(s). In an embodiment, the seal member 16 includes at least one of O-rings, non-permeable die cut or molded gaskets, and/or the like, and/or combinations thereof. The end caps 42, 42' may alternatively be designed to have a press fit with the housing 14, or they may be welded to the housing 14 and the tubes 26, 30 to form a seal therebetween. Still another option for sealing the end caps 42, 42' to the housing 14 includes solvent bonding and/or using adhesives.

Embodiments of the radial sieve module 10 also include a seal between each of the respective tubes 26, 30 and the respective end caps 42, 42'. It is to be understood that a seal member 16, or any other suitable sealing means may be used, thereby substantially preventing gas from leaking outside of the respective tube 26, 30. In a non-limitative example, a press fit may allow enough of a seal between the inner porous tube 26 and the respective end caps 42, 42' and between the outer porous tube 30 and the respective end caps 42, 42'.

The housing 14, and any integral end cap(s) 42, 42' may be formed via any suitable method. One non-limitative example of such a method is molding using a mold having a predetermined shape. The predetermined shape of the mold depends, at least in part, on whether one or both of the end caps 42, 42' are being formed integrally with housing 14.

It is to be understood that the end caps 42, 42' may be adapted to direct gas flow. Generally, one end cap 42, 42' may direct gas flow into the inner porous tube 26, and the other of the end caps 42', 42 may collect gas flow as it exits the hollow channel 34. Thus, gas may be directed into the module 10 at the inner porous tube 26 via one end cap 42, 42' at one opposed end 18, and may be directed out of the module 10 at the hollow channel 34 via another end cap 42', 42 at the other opposed end 22.

In an alternate embodiment, one end cap 42, 42' may direct gas flow into the hollow channel 34, and the other of the end caps 42', 42 may collect gas flow as it exits the inner porous tube 26. Thus, gas may be directed into the module 10 at the hollow channel 34 via one end cap 42, 42' at one opposed end 22, and may be directed out of the module 10 at the inner porous tube 26 via another end cap 42', 42 at the other opposed end 18.

In still another alternate embodiment, one of the end caps 42, 42' is adapted to direct gas flow and collect gas flow, while the other of the two end caps 42', 42 acts as a sealant. As such, in this embodiment, gas flow may be directed into the inner porous tube 26 and out of the hollow channel 34 through one end cap 42, 42'.

Embodiments of the end caps 42, 42' that allow gas to flow therethrough include one main aperture 43, 43', and may also include additional smaller apertures 44. In a non-limitative example, the end cap 42, 42' suitable for gas collection includes the additional smaller apertures 44. Furthermore, as shown in Figs. 1 and 4, the end cap 42' may include two separate pieces (shown in Fig. 4) that fit together (shown in Fig. 3) to form a sealed engagement at the opposed end 22 of the housing 14. Sealed engagement between the two separate pieces of the end cap 42, 42' may be accomplished via any suitable means (e.g., press fit, welding, solvent welding, adhesive bonding, sealing members 16, etc). In one embodiment, the smaller apertures 44 connect the hollow channel 34 to the main aperture 43, 43'; and in another embodiment, the smaller apertures 44 act similarly to the main aperture 43, 43' in that collected gas is directed to exit therethrough. It is to be understood that the additional smaller aperture(s) 44 may substantially aid in controlling the collection of the gas flow.

The radial sieve module 10 also includes an adsorbent material 38 (shown in Fig. 2) established between at least a portion of the inner and outer porous tubes 26, 30. It is to be understood that the adsorbent material 38 may be established to extend substantially a predetermined length L (e.g., from one opposed end 18 to the other opposed end 22, or from one end cap 42, 42' to the other end cap 42', 42) and a "bed length" B (both of which are shown in Fig. 2) of the inner and outer porous tubes 26, 30. As used herein, the term "bed length" refers to the radial distance from the inner porous tube 26 to the outer porous tube 30. Generally, the adsorbent material 38 is established so that it substantially completely fills the area between the inner and outer porous tubes 26, 30.

It is to be understood that the bed length B is determined as a direct function of the PSA cycle used. This length B is proportional to the flow time of the gas. Shorter bed lengths are believed to drive shorter flow cycles (i.e., shorter flow times). In a non-limitative example, the bed length B is limited by a nitrogen wave front that moves through the bed (in the case of purifying oxygen) during the PSA process.

Typical cycles for PSA range from about 8 seconds to about 15 seconds. For such cycles, the bed length B may range from about 100 mm to about 400 mm. A non-limitative example embodiment of the radial sieve module 10 disclosed herein is configured to utilize PSA cycles less than about 2 seconds and have a bed length B ranging from about 5 mm to about 40 mm. This advantageously reduces the required volume of adsorbent material 38, and the total volume of the sieve module 10.

In an embodiment, the adsorbent material 38 is selected from zeolites, activated carbon, silica gel, and combinations thereof. In a further embodiment, the adsorbent material 38 is selected from Li-LSX beads; zeolite X; zeolite Y; zeolite LSX; MCM-41 zeolites; activated alumina; and/or silicoaluminophosphates (SAPOS); and/or combinations thereof. Generally, the adsorbent material 38 includes a plurality of particles. As the adsorbent material 38 is established between two porous tubes 26, 30, it is to be understood that each of the plurality of pores of the porous tubes 26, 30 has a maximum diameter smaller than a minimum diameter of each of the plurality of particles of the adsorbent material 38. This substantially ensures that the adsorbent material 38 will be maintained between the porous tubes 26, 30. As such, the size (i.e., diameter) of the adsorbent material 38 particles may depend, at least in part, on the material selected for the inner and outer porous tubes 26, 30. In some embodiments, any diameter may be suitable. As non-limitative examples, the diameter of the adsorbent material 38 particles ranges from about 100 µm to about 800 µm; or from about 400 µm to about 800 µm.

The adsorbent material 38 is capable of selectively trapping some fluid(s) (e.g., gas molecule(s), contaminants, water molecules, or the like), while allowing other fluid(s) to pass therethrough. Generally, the adsorbency rates are specific to the material 38 selected. In an embodiment, the gas flow contains at least oxygen and another gas. As a non-limitative example, the gas flow may be air, whereby an adsorbent material 38 may trap nitrogen and oxygen from the air at significantly different rates, thereby allowing the oxygen to become substantially purified. In other embodiments, the adsorbent material 38 may be designed for the purification of other gas(es) by targeting specific contaminants. In still another embodiment, the adsorbent material 38 may be used as a desiccant drying device.

In yet a further embodiment, a relatively thin (e.g., from about 1/100 of the bed length B to about 1/50 of the bed length B) skin layer of the adsorbent material 38 is converted or deactivated to act as a desiccant layer for water separation when exposed to humid gas. Once subjected to this humid gas, this adsorbent material 38 skin layer is generally incapable of separating nitrogen (or gases with a molecular size substantially similar to nitrogen), but will continue to separate the water molecules from the incoming gas and purge back out with every cycle of the PSA. The radial sieve module 10 according to embodiment(s) herein offers more surface area for converting or deactivation of the adsorbent material 38 for this desiccant filtration layer than traditional bed designs, which may prove advantageous in many instances, one example of which is in humid climates.

In an embodiment, the inner porous tube 26 and/or the outer porous tube 30 is/are formed of a porous polymeric material. As previously stated, the pores of the tubes 26, 30 are smaller than the minimum size of the adsorbent material particles. As a non-limitative example, any non-hydroscopic engineering grade thermoplastic material having a pore size smaller than a smallest diameter of the adsorbent material 38 particles may be used. In an embodiment using adsorbent material 38 particles having diameters greater than about 300 µm, the pore size of the inner and/or outer porous tubes 26, 30 is about 300 µm or less. It is to be understood, however, that if the adsorbent material 38 particles have larger diameters, the inner and outer porous tube 26, 30 pore sizes may be increased accordingly; and if the adsorbent material 38 particles have smaller diameters, the inner and outer porous tube 26, 30 pore sizes may be decreased accordingly.

Designing the bed length B with the inner and outer porous tubes 26, 30 substantially reduces the number of pieces for making the module 10. Some conventional modules have a multiple bed design in which many short beds are laid out in a linear fashion (one next to the other). This linear design substantially increases the total volume of the module; due, at least in part, to the spacing required from one bed to another, and the manifold required to distribute the gas to the multiple flow paths. In contrast, embodiment(s) of the module 10 disclosed herein advantageously have a decreased volume, while maintaining or increasing its efficiency.

The radial sieve module 10 (or a plurality of radial sieve modules 10) may be utilized in an oxygen concentrator system, which may be used to supply patients with high concentrations of oxygen for extended periods of time. Embodiments of the module 10 may also be used in a desiccant drying system. Still further, the module(s) 10 may be utilized in a system incorporating a PSA cycle/process, where one or more modules 10 may be utilized to produce, concentrate, or separate a gas.

An embodiment of a method for concentrating oxygen includes directing a gas flow through the main aperture 43, 43' of one of the end caps 42, 42' to the center of the inner porous tube 26 or to the hollow channel 34. It is to be understood that, initially, the gas flow travels parallel to the length of the tube 26 or channel 34. In an embodiment, the gas is pressurized (typically with a compressor) and controlled into one or more of the modules 10 by a series of valves. The valves may be controlled by a microprocessor, which takes into account the timing for the pressurization, and the flow and exhaust of the bed (i.e., the area between the inner and outer porous tubes 26, 30 where the adsorbent material 38 is located). The timing, and the bed flow/exhaust may be determined, at least in part, by the adsorbent material 38 used and the bed length B. It is to be understood that the valve design may be developed with a control algorithm to provide the proper flows based on the system design.

In an embodiment, the method also includes causing pressure in the inner porous tube 26 to increase, thereby redirecting the gas flow radially (substantially perpendicular to the initial gas flow through the tube 26) through pores of the inner porous tube 26. In another embodiment, the method includes causing pressure in the hollow channel 34 to increase, thereby redirecting the gas flow radially (substantially perpendicular to the initial gas flow through the channel 34) through pores of the outer porous tube 30. In either embodiment, an increase in pressure may be caused by a compressor. After the gas flows radially through the inner porous tube 26 or the outer porous tube 30, it contacts the adsorbent material 38, whereby (undesirable) gas molecules of the gas flow are adsorbed, thereby forming an adsorbed gas flow. It is to be understood that the adsorbed gas flow is the gas flow that continues to flow through the adsorbent material 38, and has the undesirable molecule(s) removed therefrom.

In the embodiment where gas is initially introduced into the module 10 via the inner porous tube 24, the method further includes directing the adsorbed gas flow through pores of the outer porous tube 30 and into the hollow channel 34. As the housing 14 is formed of a non-gas permeable material, the adsorbed gas flow is directed toward an end cap 42, 42' where the gas is collected. In the embodiment where gas is initially introduced into the module 10 via the hollow channel 34, the method further includes directing the adsorbed gas flow through pores of the inner porous tube 26 and out toward an end cap 42, 42' where the gas is collected.

Fig. 5A illustrates a schematic view of the embodiment of a radial sieve module 10 of Fig. 1. Fig. 5B depicts a cross-sectional view along line 5B-5B of Fig. 5A. In the embodiment of Figs. 5A and 5B, the radial sieve module 10 has a length 46 of about 80 mm from the outer surface of one end cap 42, 42' to the outer surface of the other end cap 42', 42; and a length L, 50 of about 65 mm from the inner surface of one end cap 42, 42' to the inner surface of the other end cap 42', 42. Additionally, in the embodiment of Fig. 5B, the outer diameter 54 of the housing 14 is about 38 mm, the inner diameter 58 of the outer porous tube 30 is about 28 mm, the outer diameter 62 of the inner porous tube 26 is about 8 mm, and the inner diameter 66 of the inner porous tube 30 is about 4 mm.

It is to be understood that the dimensions disclosed herein may vary depending, at least in part, on the adsorbent material 38 utilized, and/or the capacity of the entire module 10 or system in which it is used. The diameter between the porous tubes 26, 30 (defining the bed length B) may also be determined by the adsorbent material 38 used. Still further, the length L, 50 of the tubes 26, 30 may be altered, depending, at least in part, on the output capacity required by the module 10 or the system in which it is incorporated.

While several embodiments have been described in detail, it will be apparent to those skilled in the art that the disclosed embodiments may be modified. Therefore, the foregoing description is to be considered exemplary rather than limiting.

## Claims

1. A radial sieve module, comprising:
a housing having two opposed ends;
an inner porous tube established within the housing and adapted to have fluid flow radially therethrough;
an outer porous tube substantially surrounding the inner porous tube and established a spaced distance from the housing such that a hollow channel is formed therebetween;
an adsorbent material established between at least a portion of the inner and outer porous tubes; and
an end cap adjacent each of two opposed ends of the housing, thereby substantially sealing the housing.

2. The radial sieve module as defined in claim 1 wherein one of the end caps is formed integrally with the housing.

3. The radial sieve module as defined in claim 1 wherein each of the end caps is formed integrally with the housing.

4. The radial sieve module as defined in claim 1 wherein one of the end caps is sealingly engaged with one of the two opposed ends, and an other of the end caps is sealingly engaged with an other of the two opposed ends via respective seal members.

5. The radial sieve module as defined in claim 1 wherein the adsorbent material is selected from zeolite, activated carbon, silica gel, and combinations thereof.

6. The radial sieve module as defined in claim 1 wherein one of the end caps is configured to direct gas flow into one of the inner porous tube or the hollow channel, and wherein an other of the end caps is configured to collect gas flow as it exits an other of the hollow channel or the inner porous tube.

7. The radial sieve module as defined in claim 1 wherein one of the end caps is adapted to direct gas flow and collect gas flow.

8. The radial sieve module as defined in claim 1 wherein the adsorbent material is established to extend substantially an entire length of the inner and outer porous tubes.

9. The radial sieve module as defined in claim 1 wherein each of the inner porous tube and the outer porous tube is formed of a porous polymeric material.

10. The radial sieve module as defined in claim 9 wherein each of the inner porous tube and the outer porous tube is formed of a non-hydroscopic thermoplastic material having a pore size smaller than a smallest diameter of the adsorbent material.

11. The radial sieve module as defined in claim 1 wherein each of the inner porous tube and the outer porous tube has a plurality of pores, wherein the adsorbent material includes a plurality of particles, and wherein each of the plurality of pores has a maximum diameter smaller than a minimum diameter of each of the plurality of particles.

12. A method for using the radial sieve module as defined in claim 1, the method comprising operatively disposing the radial sieve module in an oxygen concentrator system.

13. The method as defined in claim 12 wherein a plurality of the radial sieve modules is operatively disposed in the oxygen concentrator system.

14. A method for concentrating oxygen, comprising:
directing a gas flow through an inner porous tube disposed within an outer porous tube, each of the inner and outer porous tubes disposed within a housing, wherein an adsorbent material is located substantially between the inner and outer porous tubes, and wherein a hollow channel is defined between the outer porous tube and the housing;
increasing pressure in the inner porous tube, thereby redirecting the gas flow radially through pores of the inner porous tube and through the adsorbent material, whereby the adsorbent material adsorbs at least one gas molecule of the gas flow, thereby forming an adsorbed gas flow;
directing the adsorbed gas flow through pores of the outer porous tube, and into the hollow channel; and
collecting the adsorbed gas flow from the hollow channel.

15. The method as defined in claim 14 wherein the gas flow contains at least oxygen and an other gas containing the at least one gas molecule.

16. The method as defined in claim 15 wherein the other gas is nitrogen gas.

17. The method as defined in claim 14 wherein the gas flow directed through the inner porous tube flows in a first direction that is substantially perpendicular to the radial gas flow.

18. A method for concentrating oxygen, comprising:
directing a gas flow through a hollow channel defined between an outer porous tube and a housing, the outer porous tube substantially surrounding an inner porous tube, and an adsorbent material located substantially between the inner and outer porous tubes;
increasing pressure in the hollow channel, thereby redirecting the gas flow radially through pores of the outer porous tube and through the adsorbent material, whereby the adsorbent material adsorbs at least one gas molecule of the gas flow, thereby forming an adsorbed gas flow;
directing the adsorbed gas flow through pores of the inner porous tube and to a center of the inner porous tube; and
collecting the adsorbed gas flow from the center of the inner porous tube.

19. The method as defined in claim 18 wherein the gas flow contains at least oxygen and an other gas containing the at least one gas molecule.

20. The method as defined in claim 18 wherein the gas flow directed through the hollow channel flows in a first direction that is substantially perpendicular to the radial gas flow.
